# EUROPEAN PATENT SPECIFICATION

(11) **EP 3 995 695 B1**
(45) Date of publication and mention of the grant of the patent: **08.11.2023**
(21) Application number: 21199954.5
(22) Date of filing: 29.09.2021
(51) Int. Cl.: F04B 39/02, F04B 39/14, F04B 39/00, F16C 3/12, F16C 3/20

(54) **A COMPRESSOR WITH IMPROVED CONNECTION OF CRANK WEIGHT AND ADDITIONAL WEIGHT**
KOMPRESSOR MIT VERBESSERTER VERBINDUNG VON KURBELGEWICHT UND ZUSÄTZLICHEM GEWICHT
COMPRESSEUR DOTÉ D'UNE CONNEXION AMÉLIORÉE DE POIDS DE VILEBREQUIN ET DE POIDS SUPPLÉMENTAIRE

(30) Priority: 06.11.2020 TR 202017758
(43) Date of publication of application: 11.05.2022
(73) Proprietor: Arçelik Anonim Sirketi, 34445 Istanbul (TR)
(72) Inventor: OZDILEK, Melih, 34445 ISTANBUL (TR); TASDELEN, Ergin, 34445 ISTANBUL (TR)

(56) References cited:
- WO-A1-2015/096848
- WO-A1-2015/096850
- CN-A- 110 821 792
- CN-Y- 201 321 983
- DE-A1-102006 030 493

## Description

The present invention relates to a compressor wherein the crank weight and additional counterweight are mounted in a secure manner without any rivets.

Hermetic compressors are used in various applications such as cooling devices and air conditioners. In compressors, the refrigerant is circulated in the refrigeration cycle and enters the compressor. The refrigerant is pumped by means of the motor and the piston. The piston moves back and forth and forces the refrigerant to move towards the cylinder head. After passing the cylinder head, the refrigerant joins the refrigerant cycle again. During the operation of the compressor, the rotational movement received from the motor is transferred to the piston with the crank, connection rod and crankpin mechanism. The pressure of the refrigerant fluid increases after being compressed by the reciprocating movement of the piston. High-pressure gas is delivered to the cylinder head exhaust chamber by passing through the exhaust port with the opening of the exhaust leaf on the valve table. The gas in the exhaust chamber is delivered to the exhaust silencer and sent to the system by means of the vibration pipe. During the reciprocating movement of the piston, vibrations occur due to the unbalanced masses in the crank and rotor in the compressor. This causes unwanted results such as noise, vibration, etc. during the operation of the compressor.

In the state of the art, in order to solve said problem, additional weights are mounted onto rotary masses such as crank, rotor, etc. In the state of the art, the additional weight is mounted by means of the mounting holes arranged on the own weight of the crank and at least one connection member such as rivet, screw, etc. The mounting of the additional weight to the crank weight by means of rivets leads to additional labor and use of additional components. Moreover, if the mounting is erroneously performed by the operator and the optimum torque values predetermined by the producer are not reached, unwanted results such as breaking, noise, etc. may occur.

In the state of the art Chinese Utility Model Document No. CN201321983, a compressor is disclosed, comprising an additional weight which is connected to the crank weight by pins. In the state of the art, Chinese Patent Application No. CN110821792A discloses a self-adaptive dynamic balancing device for compressor crankshafts. In the state of the art, Patent Application No. WO2015096850A1 discloses a crankshaft comprising a counterweight having a retainer and an additional counterweight slidably seated into the retainer in a manner movable between two positions. It is also disclosed that additional weight can be secured into recess of the retainer by one or more brackets.

The aim of the present invention is the realization of a compressor wherein the crank weight and the additional counterweight are mounted in a more secure and easy manner.

The compressor of the present invention comprises a crank weight which is disposed on the crank, and an additional weight which is mounted onto the crank weight to balance the crank weight.

The compressor of the present invention provides that the additional weight is securely mounted onto the crank weight without any screws or rivets.

In the present invention, at least one claw is provided on the additional weight, and said claw is engaged with a flat edge of the crank weight such that the additional weight and the crank weight are connected to each other by snap-fit connection.

In an embodiment of the present invention, the claw comprises a C-shaped gripping area which seats on a flat edge of the crank weight and an extension on one end of the C shape extending towards the surface of the crank weight facing the long part of the crankshaft. Thus, after the additional weight is connected to the crankshaft, the additional weight is securely seated onto the crank weight by means of the extension and is prevented from dislodging due to vibrations.

In an embodiment of the present invention, the crank weight and the additional weight have symmetrical, semicircular mounting surfaces. The mounting is completed as said surfaces seat on each other. In this embodiment, the additional weight comprises three claws which grip the crank weight, two on the end portions and one being the arc of the semicircle.

In an embodiment of the present invention, at least one housing in the form of a hole and/or recess suitable for engaging with the claw is provided on the crank weight.

By means of the present invention, a compressor is realized, having an additional weight-crank weight mounting structure which eliminates the need for additional mounting components and prevents any erroneous mounting by the operator.

The drawings are not meant to delimit the scope of protection as identified in the claims nor should it be referred to alone in an effort to interpret the scope identified in the claims without recourse to the technical disclosure in the description of the present invention.

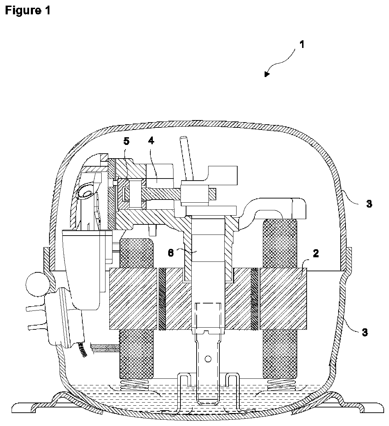

**Figure 1** **-** is the schematic view of the compressor of the present invention.

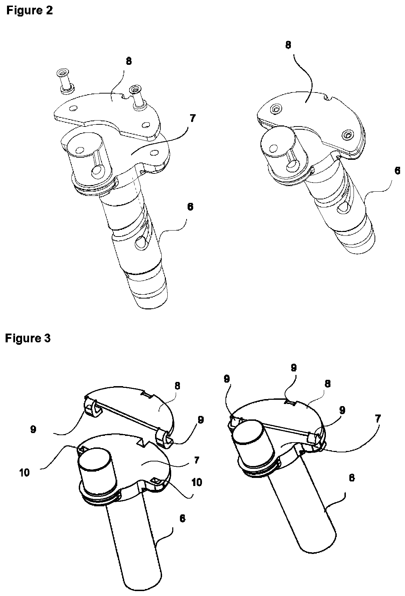

**Figure 2** - is the view showing the state of the art riveted connection of the crank weight and the additional weight.
**Figure 3** - is the view of an embodiment showing the connection of the crank weight and the additional weight in the compressor of the present invention.

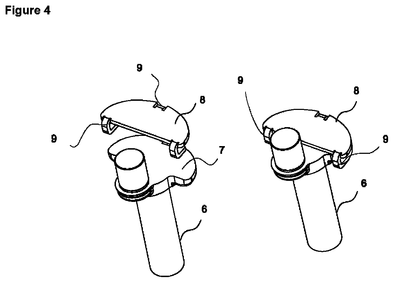

**Figure 4** - is the view of another embodiment showing the connection of the crank weight and the additional weight in the compressor of the present invention.

The following numerals are referred to in the description of the present invention:
1. Compressor
2. Motor
3. Casing
4. Cylinder
5. Piston
6. Crank
7. Crank weight
8. Additional weight
9. Claw
10. Housing

The compressor (1) is suitable for use in cooling devices, and comprises a casing (3); a motor (2) having a stator and a rotor; a cylinder (4) which is provided in the casing (3) and which sucks and pumps the refrigerant; a piston (5) which moves inside the cylinder (4); a crank (6) which transfers the movement of the motor (2) to the piston (5); a crank weight (7) which prevents vibrations caused by the unbalanced masses during the reciprocating movement of the piston (5), and an additional weight (8) which is placed onto the crank weight (7).

The compressor (1) of the present invention comprises at least one claw (9) which enables the additional weight (8) to be mounted to the crank weight (7).

The compressor (1) of the present invention comprises a crank weight (7) provided on the crank (7), which transfers the movement of the motor (2) to the piston (5); and at least one additional weight (8) which is placed onto the crank weight (7) so as to balance the crank weight (7). The additional weight (8) and the crank weight (7) are mounted to each other by means of at least one claw (9) without using any additional connection members such as screw, etc.

In the present invention, the compressor (1) comprises at least one claw (9) provided on the additional weight (8), and the crank weight (7) having a flat edge suitable for engaging with the claw (9). Thus, the claw (9) engages with the crank weight (7) via the flat edge, ensuring that the additional weight (8) securely engages with the crank weight (7).

In an embodiment of the present invention, the compressor (1) comprises the crank weight (7) having at least one housing (10) wherein the claw (9) is seated. In this embodiment, the claw (9) engages with the housing (10) in the form of a hole and/or recess, thus providing a more secure mounting.

In an embodiment of the present invention, the compressor (1) comprises a semicircular additional weight (8) which is suitable for being placed on a semicircular crank weight (7) and which has three claws (12), one claw (9) at each end of the additional weight (8) and another claw (12) provided on the arc of the additional weight (8); and the crank weight (7) having three housings (10) suitable for engaging with the claws (9). Thus, the additional weight (8) and the crank weight (7) are connected to each other at at least one point of all the overlapping surfaces so as to minimize vibrations and noise which may occur during the operation of the compressor (1).

In an arrangement not covered by the present invention, the compressor (1) may comprise at least one claw (9) provided on the crank weight (7), and an additional weight (8) which is fixed by being seated onto the claw (9). In this arrangement, the additional weight (8) to be placed on the crank weight (7) is seated onto the claws (9) on the crank weight (7) and fixed onto the crank weight (7) in the form of a plate.

In the compressor (1) of the present invention, the additional weight (8) and the crank weight (7) are mounted to each other in a more secure and quick manner.

## Claims

1. A compressor (1), suitable for use in cooling devices, comprising: a casing (3); a motor (2) having a stator and a rotor; a cylinder (4) which is provided in the casing (3) and which sucks and pumps the refrigerant; a piston (5) which moves inside the cylinder (4); a crank (6) which transfers the movement of the motor (2) to the piston (5); a crank weight (7) comprising a flat edge, which prevents vibrations caused by the unbalanced masses during the reciprocating movement of the piston (5); an additional weight (8) which is placed onto the crank weight (7); and at least one claw (9) provided on the additional weight (8), which enables the additional weight (8) to be mounted to the crank weight (7), **characterized in that** the at least one claw (9) is adapted to engage with the flat edge such that the additional weight (8) is fixed to the crank weight (7) by snap-fit connection.

2. A compressor (1) as in Claim 1, **characterized in that** the crank weight (7) has at least one housing (10) wherein the claw (9) is seated.

3. A compressor (1) as in any one of the above claims, **characterized in that** the additional weight (8) is a semicircular additional weight (8) which is suitable for being placed on a semicircular crank weight (7) and which has three claws (12), one claw (9) at each end of the additional weight (8) and another claw (12) provided on the arc of the additional weight (8); and the crank weight (7) having three housings (10) suitable for engaging with the claws (9).

## Patentansprüche

1. Ein Kompressor (1), geeignet für den Einsatz in Kühlgeräten, **umfasst:**
ein Gehäuse (3); einen Motor (2) mit einem Stator und einem Rotor; einen Zylinder (4), der im Gehäuse (3) vorgesehen ist und das Kältemittel ansaugt und pumpt; einen Kolben (5), der sich im Zylinder (4) bewegt; eine Kurbel (6), die die Bewegung des Motors (2) auf den Kolben (5) überträgt; ein Kurbelgewicht (7) mit einer flachen Kante, die Vibrationen verhindert, die durch die Unwuchtmassen während der Hin- und Herbewegung des Kolbens (5) verursacht werden; ein Zusatzgewicht (8), das auf das Kurbelgewicht (7) aufgesetzt wird; und mindestens einer am Zusatzgewicht (8) vorgesehenen Klaue (9), die eine Montage des Zusatzgewichts (8) am Kurbelgewicht (7) ermöglicht, **gekennzeichnet ist er dadurch,** dass die mindestens eine Klaue (9) derart in den Flachrand eingreifen kann, dass das Zusatzgewicht (8) durch eine Schnappverbindung am Kurbelgewicht (7) fixiert ist.

2. Ein Kompressor (1), wie in Anspruch 1 aufgeführt, **ist dadurch gekennzeichnet, dass** das Kurbelgewicht (7) mindestens ein Gehäuse (10) aufweist, in dem die Klaue (9) sitzt.

3. Ein Kompressor (1), wie in einem der vorherigen Ansprüchen aufgeführt, **ist dadurch gekennzeichnet, dass** das Zusatzgewicht (8) ein halbkreisförmiges Zusatzgewicht (8) ist, das geeignet ist, auf ein halbkreisförmiges Kurbelgewicht (7) aufgesetzt zu werden, und das drei Klauen (12) aufweist, eine Klaue (9) an jedem Ende des Zusatzgewichts (8) und eine weitere Klaue (12), die auf dem Bogen des Zusatzgewichts (8) vorgesehen ist; und dass das Kurbelgewicht (7) drei Gehäuse (10) aufweist, die geeignet sind, mit den Klauen (9) in Eingriff zu kommen.

## Revendications

1. Compresseur (1), approprié pour une utilisation dans des dispositifs de refroidissement, **comprenant** :
un boîtier (3) ; un moteur (2) ayant un stator et un rotor ; un cylindre (4) qui est prévu dans le boîtier (3) et qui aspire et pompe le réfrigérant ; un piston (5) qui se déplace à l'intérieur du cylindre (4) ; une manivelle (6) qui transfère le mouvement du moteur (2) au piston (5) ; un poids de manivelle (7) comprenant un bord plat, qui empêche les vibrations causées par les masses déséquilibrées pendant le mouvement de va-et-vient du piston (5) ; un poids supplémentaire (8) qui est placé sur le poids à manivelle (7) ; et au moins une griffe (9) prévue sur le poids supplémentaire (8), qui permet au poids supplémentaire (8) d'être monté sur le poids à manivelle (7), **caractérisé en ce que** l'au moins une griffe (9) est adaptée pour s'engager avec le bord plat de sorte que le poids supplémentaire (8) est fixé au poids à manivelle (7) par liaison par encliquetage.

2. Un compresseur (1) selon la déclaration 1, **caractérisé en ce que** la masse de la manivelle (7) comporte au moins un logement (10) dans lequel la griffe (9) est assise.

3. Un compresseur (1) comme dans l'une quelconque des déclarations ci-dessus, **caractérisé en ce que** le poids supplémentaire (8) est un poids supplémentaire semi-circulaire (8) qui est adapté pour être placé sur un poids de manivelle semi-circulaire (7) et qui a trois griffes (12), une griffe (9) à chaque extrémité du poids supplémentaire (8) et une autre griffe (12) prévue sur l'arc du poids supplémentaire (8) ; et le poids de manivelle (7) ayant trois logements (10) adaptés pour s'engager avec les griffes (9).
